# EUROPÄISCHE PATENTSCHRIFT

(11) **EP 1 348 122 B1**
(45) Veröffentlichungstag und Bekanntmachung des Hinweises auf die Patenterteilung: **18.07.2007**
(21) Anmeldenummer: 01990529.8
(22) Anmeldetag: 07.12.2001
(51) Int. Cl.: G01N 27/447

(54) **ELEKTROPHORESEVORRICHTUNG, ELEKTROPHORESEVERFAHREN UNTER VERWENDUNG EINER ELEKTROPHORESEVORRICHTUNG UND VERWENDUNG DER ELEKTROPHORESEVORRICHTUNG**
ELECTROPHORESIS DEVICE, ELECTROPHORESIS METHOD USING AN ELECTROPHORESIS DEVICE AND UTILIZATION OF AN ELECTROPHORESIS DEVICE
DISPOSITIF D'ELECTROPHORESE, PROCEDE D'ELECTROPHORESE UTILISANT UN DISPOSITIF D'ELECTROPHORESE ET UTILISATION DE CE DISPOSITIF D'ELECTROPHORESE

(30) Priorität: 18.12.2000 DE 10063096
(43) Veröffentlichungstag der Anmeldung: 01.10.2003
(73) Patentinhaber: Becton, Dickinson & Company, Franklin Lakes, NJ 07417-1880 (US)
(72) Erfinder: Gerhard Weber, 85551 Kirchheim-Heimstetten (DE)
(74) Vertreter: von Kreisler Selting Werner
(86) Internationale Anmeldenummer: PCT/EP2001/014389
(87) Internationale Veröffentlichungsnummer: WO 2002/051115

(56) Entgegenhaltungen:
- EP-A- 0 323 948
- EP-A- 0 491 528
- WO-A-91/04085
- CORDERO B M ET AL: "Analytical applications of membrane extraction in chromatography and electrophoresis" JOURNAL OF CHROMATOGRAPHY, ELSEVIER SCIENCE PUBLISHERS B.V. AMSTERDAM, NL, Bd. 902, Nr. 1, 24. November 2000 (2000-11-24), Seiten 195-204, XP004223377 ISSN: 0021-9673

## Beschreibung

Die Erfindung betrifft eine Elektrophoresevorrichtung, ein Elektrophoreseverfahren unter Verwendung einer Elektrophoresevorrichtung und die Verwendung der Elektrophoresevorrichtung.

Es sind Elektrophoresevorrichtungen und elektrophoretische Trennverfahren bekannt, bei denen Probesubstanzen an der Grenzfläche zwischen der flüssigen Phase und der Feststoffphase in die einzelnen Probenspezies aufgetrennt werden.

Ein dazu analoges Trennverfahren nämlich die Druckfiltration hat bereits eine breite technische Anwendung gefunden und wird in großem Umfang auch zur Trennung von Biopolymeren verwendet. Demgegenüber wird die elektrophoretische Trennung, das sogenannten elektrophoretische Filtrationsverfahren oder kurz die Elektrofiltration überwiegend selten verwandt, obwohl dieses Verfahren als besonders vorteilhaft erscheint, da während des elektrophoretischen Transfers über die in der Trennkammern der entsprechenden Elektrophoresevorrichtung vorgesehene Trennmembran im Gegensatz zur Druckfiltration nicht das gesamte Probenvolumen sondern nur die ionischen Spezies und nicht das gesamte Volumen des Lösungsmittels transportiert werden müssen. Der Grund für die seltene Anwendung des Elektrofiltrationsverfahrens beruht darauf, daß insbesondere bei der Trennung von Biopolymeren nach diesem Verfahren Probleme auftreten, die unter anderem in der irreversiblen Sorption und Denaturierung der Biopolymeren, in der Begrenzung der Elektrofiltration aufgrund technischer Probleme bei der optimalen Abführung der Wärme, die während des elektrophoretischen Vorgangs entsteht, und in der Veränderung der Trenneigenschaften des Material der Feststoffphase, das heißt der Trennmembran, zu sehen sind.

Die irreversible Sorption an der Grenzfläche zwischen der flüssigen Phase und der Feststoffphase, das heißt der Trennmembran kann durch die Verwendung von biokompatiblen Kunststoffmembranen weitgehend minimiert werden, die Veränderung der Trenneigenschaften der Membranen nach einer längeren Kontaktzeit mit den zu trennenden Biopolymeren, was als "Fouling" bezeichnet wird, kann allerdings bisher nicht verhindert werden.

Die Probleme bei der Verwendung der Elektrofiltration aufgrund der diesem Trennprozeß inhärenten Wärmeentwicklung beschränken in der Praxis entscheidend sowohl die Anwendungsbreite dieses Verfahrens als auch den Mengendurchsatz im Vergleich zur Druckfiltration. Bei einer ungünstigen erhöhten Wärmeentwicklung im Material der Trennmembrane können die charakteristischen Trenneigenschaften bezeichnend verändert werden und kann das Material in Folge von Überhitzung sogar zerstört werden.

Es sind weiterhin elektrophoretische Trennverfahren zur Trennung von Biopartikeln in wäßriger Lösung, die als trägerfreie Elektrophorese oder Free Flow Elektrophorese FFE bezeichnet werden, sowie entsprechende elektrophoretische Trennvorrichtungen bekannt. Bei dieser elektrophoretischen Trennung von Biopartikeln in wäßriger Lösung müssen Medien mit hoher Leitfähigkeit verwendet werden, um die Vitalität der Biopartikel während und nach der Trennung aufrecht zu erhalten. Dazu muß unter anderem das Problem der optimalen Abführung der Wärme aus der Trennkammer gelöst werden, da steigende Temperaturen in der Trennkammer eine deutliche Verschlechterung der Trennleistung verursachen. Das heißt, daß zur Optimierung die Temperaturgradienten an jeder Stelle im Trennkammerspalt ebenso wie die Temperaturunterschiede an den verschiedenen Stellen im Trennraum minimiert werden müssen. Um die Trennleistung bei der FFE zu erhöhen, muß weiterhin die Trennung der Biopartikel bei möglichst hohen elektrischen Feldstärken erfolgen, was aufgrund der hohen Leitfähigkeit der Medien zu einer überproportionalen Zunahme der beim Trennvorgang entstehenden Prozeßwärme führt.

Die auf dem Markt erhältlichen Elektrophoresevorrichtungen zur Trennung von Biopartikeln, die nach dem FFE Verfahren arbeiten, wurden daher insoweit optimiert, daß einerseits eine für die gewünschte Trennleistung notwendige elektrische Feldstärke verwendet wurde und gleichzeitig eine optimale Abführung der Prozeßwärme dadurch erreicht wurde, daß ein möglichst geringer Trennkammerspalt gewählt wurde.

Aus der DE 69029466 T2 ist weiterhin eine Elektrophoresevorrichtung mit längsverlaufenden Hohlfasern bekannt, die zur Durchleitung eines Kühlmediums dienen.

EP-A-0 491 528 offenbart eine Vorrichtung für die Elektrophorese bestehend aus einer Trennkammer mit Einlass und Auslass, einem Trennelement und Elektroden. Das Trennelement ist eine semipermeable Membran aus Polymermaterial oder eine Hohlfaser aus diesem Material.

EP-A-0 323 948 offenbart eine Vorrichtung zur Reinigung von Proteinen oder Proteinfraktionen, wobei die Vorrichtung eine Trennkammer mit Ein- und Auslass, ein Trennelement und Elektroden aufweist. Zudem weist die Vorrichtung in ihrer einfachsten Ausführungsform eine Hohlfasermembran auf.

Die der Erfindung zugrunde liegende Aufgabe besteht demgegenüber darin, eine leistungsfähige und mit hoher Geschwindigkeit arbeitende Elektrophoresevorrichtung zu schaffen.

Diese Aufgabe wird gemäß der Erfindung durch die Ausbildung gelöst, die im Anspruch 1 angegeben ist.

Die erfindungsgemäße Elektrophoresevorrichtung arbeitet nach einem kombiniertem Verfahren der Elektrofiltration und der FFE, derart, daß die Elektrofiltration unter den Randbedingungen eines optimierten Trennprozesses der FFE durchgeführt wird, was ein schnelles Verfahren der Elektrofiltration ermöglicht und gleichzeitig die durch Überhitzung verursachten Probleme der Veränderung der Trenncharakteristik sowie einer möglichen Zerstörung des Membranmaterials vermeidet.

Besonders bevorzugte Weiterbildungen und Ausgestaltung der erfindungsgemäßen Elektrophoresevorrichtung sind Gegenstand der Ansprüche 2 bis 7.

Elektrophoreseverfahren unter Verwendung der erfindungsgemäßen Elektrophoresevorrichtung sind Gegenstand der Ansprüche 8 bis 10.

Ein weiterer Gegenstand der vorliegenden Erfindung ist die Verwendung der erfindungsgemäßen Elektrophoresevorrichtung zur Immunextraktion.

Im Folgendem werden anhand der zugehörigen Zeichnung besonders bevorzugte Ausführungsbeispiele der Erfindung näher beschrieben. Es zeigen:
- Figur 1 eine Draufsicht auf ein erstes Ausführungsbeispiel der erfindungsgemäßen Elektrophoresevorrichtung,
- Figur 2 eine Schnittansicht des in Figur 1 dargestellten Ausführungsbeispiels,
- Figur 3 eine Draufsicht auf das in Figur 1 dargestellte Ausführungsbeispiel mit Einleitung der Probesubstanz in der Hohlfaser,
- Figur 4 eine Draufsicht auf das in Figur 1 dargestellte Ausführungsbeispiel mit Einleitung der Probesubstanz im Trennraum,
- Figur 5 eine Draufsicht auf das in Figur 1 dargestellte Ausführungsbeispiel bei der sogenannten Immunextraktion,
- Figur 6 eine Draufsicht auf ein Ausführungsbeispiel der erfindungsgemäßen Elektrophoresevorrichtung, das dem in Figur 1 dargestellten Ausführungsbeispiel entspricht, jedoch nach einem Simultanmehrfachprozeß arbeitet,
- Figur 7 eine Draufsicht auf das in Figur 1 dargestellte Ausführungsbeispiel in Kombination mit einer FF-isoelektrischen Fokussierung,
- Figur 8A bis 8C Schnittansichten weiterer Ausführungsbeispiele der erfindungsgemäßen Vorrichtung zur Darstellung der Form des Trennelementes und
- Figur 9A bis 9C in schematischen Darstellungen die Arbeitsweise der erfindungsgemäßen Elektrophoresevorrichtung.

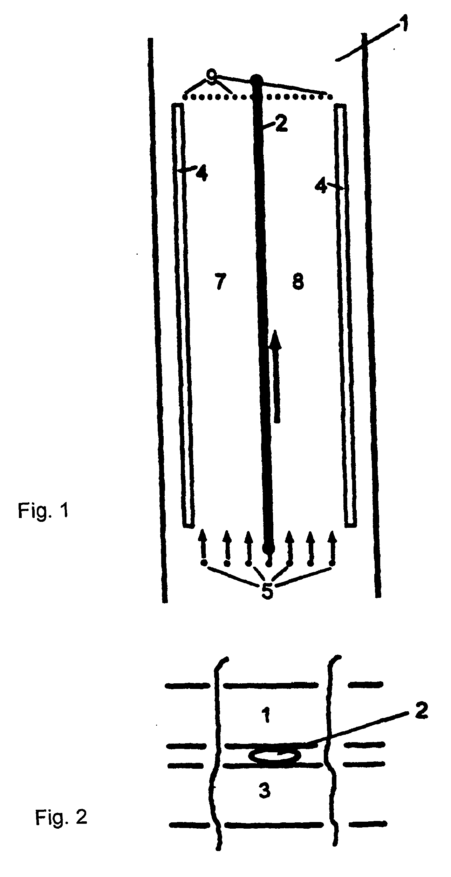

Das in Figur 1 dargestellte Ausführungsbeispiel der erfindungsgemäßen Elektrophoresevorrichtung weist eine horizontal ausgerichtete FFE-Trennkammer mit einer kleinen Spaltbreite von z.B. 0,3 bis 1 mm auf, die zwischen einem Kunststoffblock 1 und einem Metallblock 3 mit Isolierabdeckung ausgebildet ist. Die Trennkammer weist auf der Einlaßseite wenigstens einen Probeneinlaß und mehrere Medieneinlässe 5 sowie auf der Auslaßseite mehrere Auslässe 9 für die elektrophoretisch behandelten Probenspezies auf.

In der Trennkammer verläuft zwischen der Ein- und der Auslaßseite eine Hohlfaser 2, die die Trennkammer in zwei Trennkammerteile 7 und 8 unterteilt. Elektroden 4 sind parallel zur Hohlfaser 2 auf beiden Seiten der Trennkammer von der Ein- zur Auslaßseite angeordnet. Bei entsprechender Polung der an den Elektroden liegenden Gleichspannung ist der Trennkammerteil 7 der Trennraum für anionische Spezies und ist der Trennkammerteil 8 der Trennraum für kationische Spezies. Die Elektrodenspannung wird dabei vorzugsweise so gewählt, daß kurze Wanderungsstrecken der Spezies zur Trennung ausreichen.

Die Hohlfaser 2 ist mit einem Einlaß und einem Auslaß versehen und weist in ihrem Inneren einen durchgehenden Hohlraum auf, der vom Ein- zum Auslaß verläuft. Wie es in Figur 1 dargestellt ist, erstreckt sich die Hohlfaser 2 in Längsrichtung über die Auslässe 9 für die getrennten Spezies hinaus.

Die verwandte Hohlfaser 2 hat vor ihrem Einbringen in die Trennkammer einen Außendurchmesser, der deutlich größer als die Breite des Trennkammerspaltes ist, wobei der Wert der Wandstärke der Hohlfaser 2 deutlich kleiner als die Hälfte der Breite des Trennkammerspaltes ist. Beim Einbringen der Hohlfaser 2 in die Trennkammer wird die Hohlfaser 2 aus ihrer kreisrunden Form in eine ovale Form des Innenquerschnittes flachgedrückt, die dennoch eine ungehinderte Durchleitung der zu trennenden Probesubstanzen erlaubt.

Die Hohlfaser 2 ist parallel zu den Elektroden 4 innerhalb der elektrophoretischen Trennkammer angeordnet, so daß dann, wenn die in Figur 1 dargestellte Elektrophoresevorrichtung mit einer wäßrigen Lösung mit darin gelösten Salzen beschickt wird und an die Elektroden 4 eine Gleichspannung gelegt wird, die ionischen Spezies in der Flüssigkeit außer- und innerhalb der Hohlfaser 2 in Richtung der Elektroden bewegt werden. Die anionischen und kationischen Spezies des verwendeten Salzes wandern in der wäßrigen Lösung aus der flüssigen Phase durch die Hohlfaser 2 in Richtung der Elektroden 4. Gelöste ionische Polymere, die während der elektrophoretischen Wanderung die Grenzfläche zwischen der Hohlfaser 2 und der wäßrigen Lösung erreichen, werden an dieser Grenzfläche zurückgehalten, wenn die Porengröße der Hohlfaser 2 verglichen mit der Größe bzw. dem Molekulargewicht der ionischen Polymere ausreichend klein ist. Diese Rückhaltung der polymeren Spezies tritt gleichermaßen in der wäßrigen Phase außerhalb der Hohlfaser 2 sowie im Innenhohlraum der Hohlfaser 2 auf. Das Material und die Porengröße der Hohlfaser 2 sind für die jeweilige Anwendung, d. h. für die zu behandelnden Proben verschieden und werden dementsprechend gewählt. Auch die Lage, d. h. die richtige Positionierung der Hohlfaser 2 in der Trennkammer ist in Abhängigkeit von der gewünschten Trennung der Materialien gewählt. Zum Beispiel ist eine Rückhaltung eines Analyten an der Phasengrenze der Hohlfaser 2 nur dann möglich, wenn die Wanderung nach Zugabe der Probe in Richtung auf die Hohlfaser erfolgt.

Die in Figur 1 dargestellte Elektrophoresevorrichtung kann für verschiedene Anwendungen insbesondere zur Elektrofiltration unter den Bedingungen der FFE, ohne diese als Trennverfahren zu benutzen, zur zweistufigen Trennung, optimiert durch die Nutzung der Möglichkeiten beider Trennverfahren, zur Elektrofiltration als Maßnahme der Probenaufgabe, um eine aufwendige Probenkonditionierung zu umgehen oder diese wenigstens zu vereinfachen, oder eine hochselektive elektrophoretische Trennung der Elektrofiltration, z. B. als Immunextraktion benutzt werden:

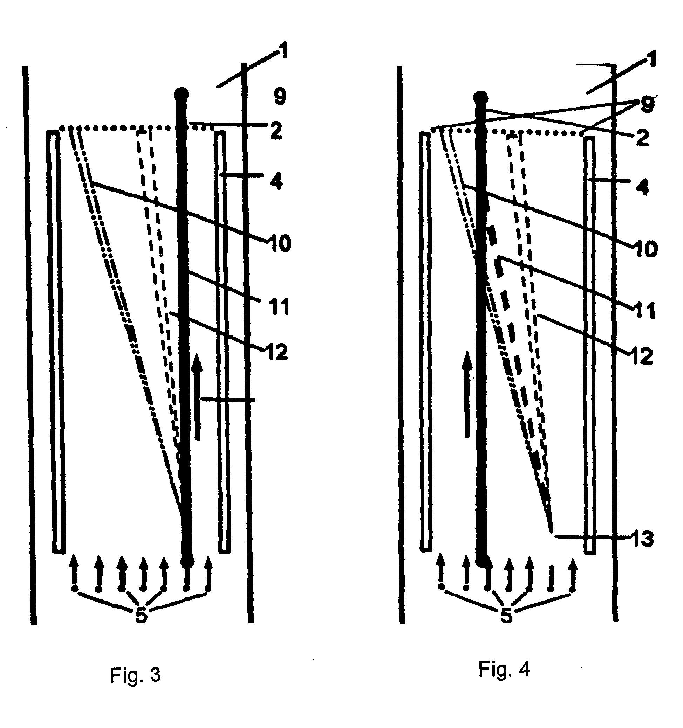

Bei der Elektrofiltration kann die Probe, die durch Elektrofiltration zu trennen ist, entweder über den Innenhohlraum der Hohlfaser 2 oder in den Zwischenraum zwischen einer Elektrode 4 und der Hohlfaser 2 eingegeben werden, was in den Figuren 3 und 4 jeweils dargestellt ist. Bei der Zugabe der Probe im Zwischenraum zwischen einer Elektrode 4 und der Hohlfaser 2 muß allerdings beachtet werden, daß diese Zugabe seitenrichtig erfolgt, da eine Rückhaltung an der Phasengrenze zwischen der wäßrigen Phase und der Hohlfaser 2 nur zu erwarten ist, wenn die Wanderung der polymeren Substanz in Richtung auf die Hohlfaser 2 erfolgt.

In Figur 3, in der die Zugabe der Probe in den Innenhohlraum der Hohlfaser 2 dargestellt ist, sind die Bahnen von drei Analyten mit 10, 11 und 12 jeweils bezeichnet. Das heißt insbesondere, daß der Analyt 11 in der Hohlfaser 2 verbleibt.

In Figur 4 sind die Bahnen der Analyten ausgehend von einer Probendosierstelle 13 im Zwischenraum zwischen der Hohlfaser 2 und einer Elektrode 4 gleichfalls mit 10, 11 und 12 bezeichnet. Bei dieser Anwendungsart wird somit der Analyt 11 an der Außenfläche, das heißt der Grenzfläche zwischen der flüssigen Phase und der festen Phase zurückgehalten.

Wenn das Medium innerhalb der Hohlfaser 2 im Vergleich zum Medium außerhalb der Hohlfaser 2 unterschiedliche Salze und unterschiedliche Konzentrationen der Salze aufweist, so werden die ursprünglichen Salze innerhalb der Hohlfaser 2 durch die Salze außerhalb der Hohlfaser substituiert bzw. in ihrer Konzentration ausgeglichen, was auch als Probenkonditionierung bezeichnet wird.

Wenn die in dieser Weise konditionierte Probe in einem nachfolgenden unabhängigen Verfahren getrennt werden soll, wird diese aus dem Innenhohlraum der Hohlfaser 2 eluiert, wozu die Porengröße der Hohlfaser 2 genügend klein gewählt ist, um die interessierenden ionischen Analyten im Inneren der Hohlfaser 2 zurück zu halten.

Wenn eine gleichzeitige Probenkonditionierung und eine elektrophoretische Trennung mittels FFE gewünscht ist, so muß eine Hohlfaser 2 mit einer Porengröße verwendet werden, die den Transport der zu trennenden Analyten aus dem Innenhohlraum der Hohlfaser 2 in die Trennkammer erlaubt.

Es ist auch eine Extraktion von ionischen Spezies zwischen zwei wäßrigen Lösungen über die innerhalb der Trennkammer gebildete scharfe Grenzfläche möglich, die allerdings nur durchführbar ist, wenn die rheologischen Eigenschaften der Medien, die diese Grenzfläche für den Stofftransfer ausbilden, ähnlich sind und die angrenzenden Medien mit ähnlicher linearer Geschwindigkeit durch die Trennkammer transportiert werden können. Diese Randbedingungen sind in vielen Fällen aber nicht gegeben. Wird eine Hohlfaser 2 für die Zugabe eines Mediums verwendet, so können die Medien innerhalb und außerhalb der Hohlfaser 2 mit unterschiedlicher linearer Geschwindigkeit transportiert werden und es können sogar Medien mit äußerst unterschiedlichen physikalischen und chemischen Eigenschaften, wie Dichte, Viskosität, Oberflächenspannung, elektrischer Leitfähigkeit usw. zur Anwendung kommen.

Dabei kann die Richtung des Stofftransfers bzw. der Wanderung der zu extrahierenden ionischen Spezies nahezu beliebig gewählt werden, Möglichkeiten hierzu sind in den Figuren 3 und 4 dargestellt und oben bereits beschrieben. Das heißt, daß der Stofftransfer in Richtung des Zwischenraumes zwischen der Hohlfaser 2 und einer Elektrode 4 sowie längs der Hohlfaser 2 gehen kann.

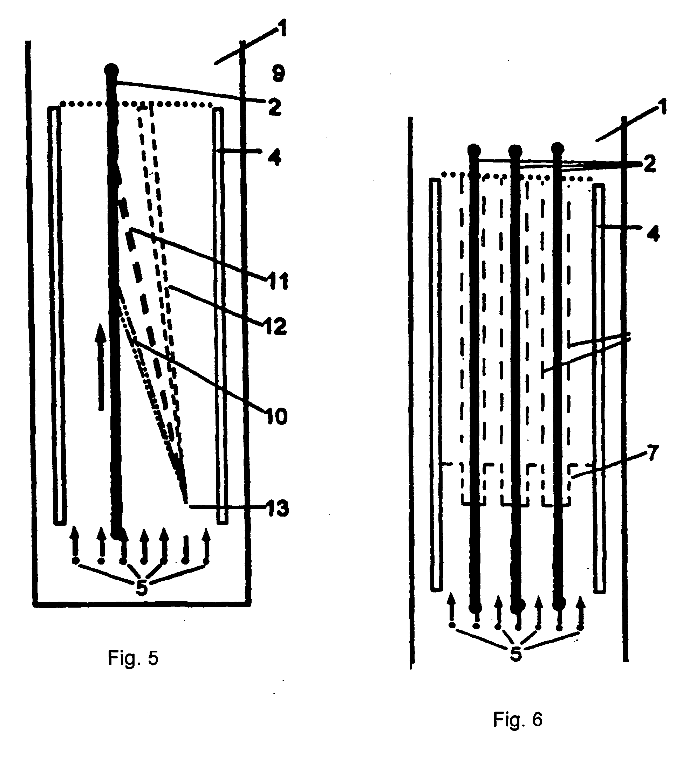

Eine weitere Anwendung der in Figur 1 dargestellten Elektrophoresevorrichtung ist die sogenannte Immunextraktion, die in Figur 5 dargestellt ist. Bei dieser Anwendung wird eine Komponente eines zu bildenden Immunkomplexes im Medium innerhalb der Hohlfaser 2 in beliebig hoher Konzentration gelöst. Das Molekulargewicht dieser Komponente bzw. die Trenngrenze der Hohlfaser 2 werden dabei so gewählt, daß diese Komponente auch unter der Bedingung der Elektrophorese im Innenhohlraum der Hohlfaser 2 verbleibt. Wie es im Einzelnen in Figur 5 dargestellt ist, wird somit der Analyt 10 als Immunkomplex in der Hohlfaser 2 zurückgehalten, wird der Analyt 11 an der Außenwand der Hohlfaser 2 zurückgehalten und nimmt der Analyt 12 die dargestellte Bahn im Zwischenraum zwischen der Hohlfaser 2 und einer Elektrode 4.

Bei der kombinierten Anwendung der Elektrofiltration und der FFE kann die sonst häufig notwendige Konditionierung der Probe vor der FFE-Trennung entfallen und ist dadurch eine Verdünnung der Probe vermeidbar, die eine erfolgreiche Trennung bzw. den gewünschten Probendurchsatz beeinträchtigen bzw. vermindern kann. Die Zuführung einer für die FFE a priori nicht geeigneten Probe in die Trennkammer über die Hohlfaser 2 in der in Figur 3 dargestellten Weise erweitert den Anwendungsbereich der FFE, vereinfacht die Probenvorbereitung und die Handhabung der Vorrichtung bei der Routineanwendung und erhöht die Chancen einer Automatisierung des gesamten Trennprozesses.

Alle FFE-Trenntechniken, das heißt die FF-Zonenelektrophorese, die FF-Isotachophorese, die FF-Isoelektrische Fokussierung und die FF-Feldsprungelektrophorese können mit dem Verfahren der Elektrofiltration kombiniert werden. Dabei ist die Kombination mit fokussierenden FF-Trenntechniken besonders vorteilhaft.

Die Kombination der Trenntechnik der FF-Feldsprungelektrophorese mit der Elektrofiltration bietet insbesondere die Möglichkeit der Durchführung der Trennung in einem parallelen Simultan-Mehrfachprozeß mit höherem Probendurchsatz. Diese Kombination in der Form eines 3-fach parallelen Simultan-Mehrfachprozesses ist in Figur 6 dargestellt, in der die Grenzfläche der Medien 6 (Konzentrierung der ionischen Analyten) und das Leitfähigkeitsprofil 7 dargestellt sind.

Die Kombination der Elektrofiltrierung mit den fokussieren FFE-Trenntechniken der FF-isoelektrischen Fokussierung und der FF-Isotachophorese bietet eine noch bessere Trennleistung als die vorgenannte Kombination, wobei die Durchführung eines simultanen parallelen Verfahrens innerhalb der Trennkammer allerdings nicht möglich ist.

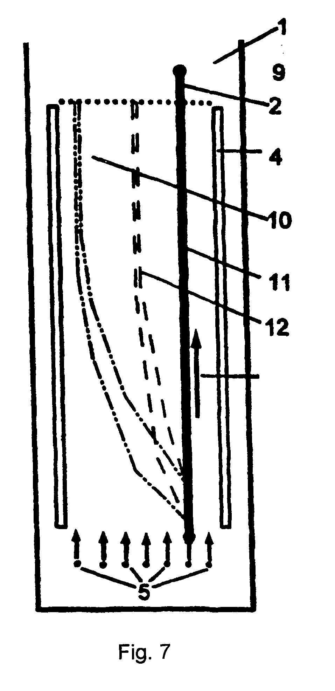

Figur 7 zeigt die Kombination der Elektrofiltration mit der Trenntechnik der FF-isoelektrischen Fokussierung, wobei die zu trennenden Substanzen alternativ aus der Hohlfaser 2 in den Zwischenraum zwischen der Hohlfaser 2 und den Elektroden 4 oder aus diesem Zwischenraum in die Hohlfaser 2 transferiert werden können, wie es bereits in Figur 3 und 4 dargestellt ist. Die Wege der Analyten sind mit 10 und 12 bezeichnet, der Analyt 11 verbleibt in der Hohlfaser 2.

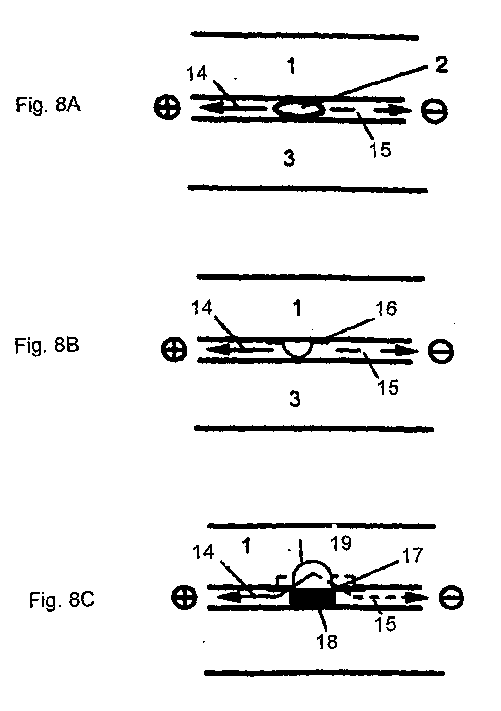

In den Figuren 8B und 8C sind alternative Ausbildungen zu der Anordnung einer Hohlfaser 2 dargestellt, die zum Vergleich nochmals in Figur 8A gezeigt ist. Dabei ist die Wanderung der Anionen und Kationen mit 14 bzw. 15 bezeichnet.

Figur 8B zeigt ein Ausführungsbeispiel, bei dem eine Flachmembran 16 auf eine Innenfläche der Blöcke 1 oder 3, vorzugsweise auf die Innenfläche des Kunststoffblockes 1, so geklebt ist, daß ein Hohlraum zwischen der Innenfläche des Kunststoffblockes 1 und der Flachmembran 16 entsteht, wobei die Höhe diese Hohlraumes größer als die Breite des Trennkammerspaltes ist. Die Flachmembran 16 teilt somit die Trennkammer in der gleichen Weise auf, wie es bei dem in Figur 8A dargestellten Ausführungsbeispiel durch die Hohlfaser 2 erreicht ist.

Die Zuführung und Abführung des Mediums in bzw. aus dem Hohlraum in der Flachmembran 16 erfolgt dabei über Bohrungen im Kunststoffblock 1.

Bei dem in Figur 8C dargestellten Ausführungsbeispiel wird statt einer vorgefertigten Hohlfaser 2 eine rinnenförmige Vertiefung 19 in der Innenoberfläche vorzugsweise des Kunststoffblockes 1 ausgebildet und sind die Bohrungen für die Zuleitung und Ableitung mit einer Flachmembran abgedeckt. Dadurch entsteht ein Kanal, der mit der zu trennenden Probe gefüllt wird. Durch eine Absperrung 18 des Stromtransportes in der Trennkammer über der Flachmembran wird der elektrophoretische Stofftransport über die Flachmembran und die Vertiefung 19 im Kunststoffblock 1 umgelenkt und werden die ionischen Spezies aus der Vertiefung 19 über die Flachmembran in die Trennkammer transferiert. Die Flüssigkeit der Vertiefung 19 kann erforderlichenfalls mittels einer externen Kühlung thermostabilisiert sein.

Wie es bereits eingangs erwähnt wurde, sinkt bei einer Druckfiltration die Permeabilität der Filtermembrane mit zunehmender Dauer der Filtration und um so schneller ab, je höher der Gehalt an Polymeren in der zu filternden Lösung ist, wobei diese Abnahme der Permeabilität der Filtermembran als Fouling in der Membran bezeichnet wird.

Bei der Elektrofiltration ist demgegenüber die Bedeutung des Foulings zwar deutlich geringer, da nicht das gesamte Probevolumen sondern nur die ionischen Spezies in der Probe in Richtung der Trennmembran transportiert werden, dennoch ist bei hohen Gehalten an ionischen polymeren Spezies, die an Trennmembran zurückgehalten werden müssen, bei längerer Dauer der Filtration der Einfluß des Fouling nicht mehr zu vernachlässigen.

Im Gegensatz zur Druckfiltration, bei der die Filtration mit Querströmung als geeignete Gegenmaßnahme zur Reduzierung des Foulings bekannt ist, wird bei der Elektrofiltration zwar die Querströmung durch die Strömungsgeschwindigkeit der Probe in der Hohlfaser verwirklicht, allerdings wird dabei die Strömungsgeschwindigkeit nicht unter dem Aspekt der Reduzierung des Foulings sondern unter dem Aspekt der Optimierung des Massentransfers über die Membran optimiert. Das heißt mit anderen Worten, daß die während der Elektrofiltration bestehende Querströmung nicht ausreicht, um wirkungsvoll das Fouling zu reduzieren bzw. zu eliminieren.

Eine Maßnahme zur weiteren Reduzierung des Foulings ist die Wahl eine pH-Wertes der zu filtrierenden Lösung, bei dem die Ladung an den Polymeren minimiert ist. Bei Biopolymeren, die amphotere Eigenschaften besitzen, wird ein pH-Wert der Lösung gewählt, der dem pH-Wert des Biopolymeren oder dessen Hauptkomponenten entspricht. Das heißt, daß das Polymer durch die elektrische Feldstärke unbeeinflußt bleibt.

Wesentlich wirksamer bei der Eliminierung des Foulings ist die folgende modifizierte Elektrofiltration:

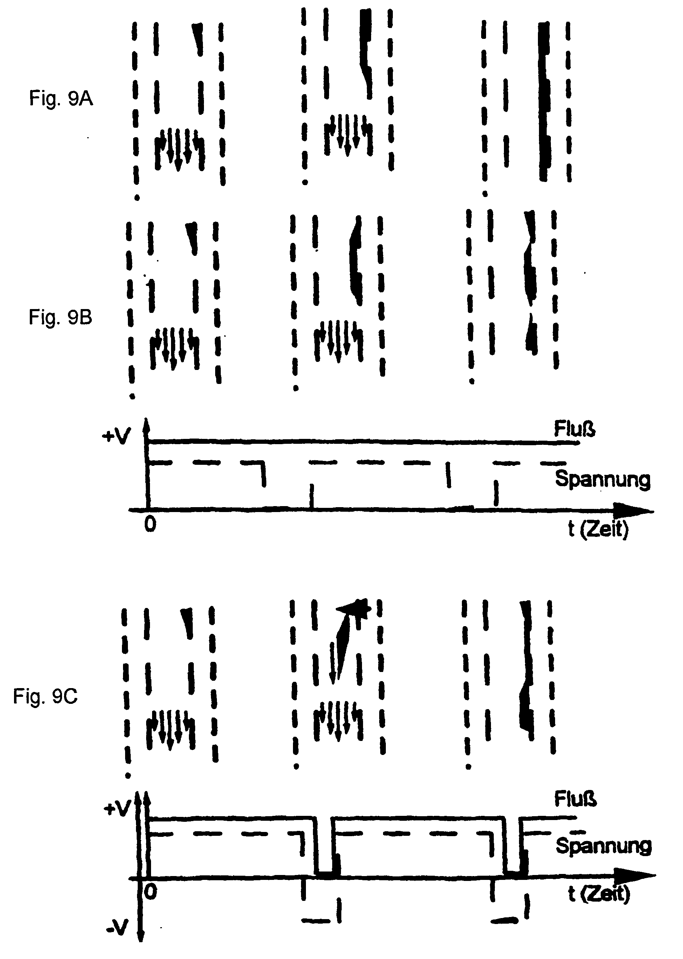

Beim Standardverfahren der Elektrofiltration wird während der gesamten Dauer der Elektrofiltration eine bestimmte Gleichspannung bzw. eine bestimmte elektrische Feldstärke angelegt. Mit zunehmender Dauer der Elektrofiltration wird zunehmend die Innenfläche der Hohlfaser und der Raum in den Poren der Trennmembran mit ionischen Polymeren belegt, was bis zur völligen Bedeckung der Innenoberfläche der Trennmembran führen kann. Wie es in Figur 9A dargestellt ist, hat das eine deutliche Reduzierung des Massentransfers über die Membran zur Folge.

Durch periodische An- und Abschaltungen der wirkenden Gleichspannung kann das Fouling wesentlich reduziert werden, da während der Zeitspanne der abgeschalteten Gleichspannung ein Großteil der Polymeren, die an die Membran während der Zeit der Elektrofiltration angelagert wurden, in der Hohlfaser weiter transportiert werden und nach vielen periodischen Wechseln von An- und Abschaltung aus der Hohlfaser eluiert werden kann. Das ist in Figur 9B dargestellt.

Wegen des ungünstigen Strömungsprofils der laminaren Strömung im Innenraum der Hohlfaser werden Polymere in direkter Nachbarschaft zur Oberfläche der Membran nur sehr langsam eluiert und die Polymeren in den Poren bleiben durch Maßnahmen der periodischen An- und Abschaltung der Gleichspannung unbeeinflußt. Wird aber ein Verfahren angewendet, bei dem nach einer bestimmten Zeit der aktiven Elektrofiltratrion die Polarität der Gleichspannung für eine allerdings deutlich kürzere Zeitspanne geändert wird, so werden die in die Poren eingewanderten Polymeren in Richtung der gegenüberliegenden Innenwand der Hohlfaser gezogen. Wird die Zeitspanne der umgekehrten Gleichspannung so gewählt, daß während dieser Periode des Trennprozesses ein Großteil der Polymeren aus dem Randbezirk bzw. aus den Poren in das Zentrum der Hohlfaser bewegt wird, dann geraten die Polymeren in den Bereich der größten Strömungsgeschwindigkeit und werden die Polymeren dadurch sehr effektiv innerhalb der Hohlfaser weiter transportiert und nach einigen Zyklen der Elektrofiltration und der Wirkung der geänderten Polarität eluiert. Das ist in Figur 9C dargestellt.

Die aktive Spülung der Wandflächen und der Poren mittels Elektrophorese kann zusätzlich durch einen periodischen Wechsel des Drucks innerhalb der Hohlfaser in der Art unterstützt werden, daß während der Zeitspanne der aktiven elektrophoretischen Spülung auch der Innendruck in der Hohlfaser im Vergleich zum Außenraum erniedrigt wird. Dadurch wird die Spülung durch eine gleichzeitige und gleichgerichtete Druckspülung unterstützt.

## Patentansprüche

1. Elektrophoresevorrichtung mit
- einer Trennkammer, die auf der Einlaßseite mit wenigstens einem Probeneinlaß und auf der Auslaßseite mit Auslässen (9) für die elektrophoretisch behandelten Probenspezies versehen ist,
- wenigstens einem selektiv für bestimmte Probenspezies permeablen Trennelement (2) mit längs verlaufendem durchgehendem Innenhohlraum, das in der Trennkammer von der Einlaßseite zur Auslaßseite angeordnet ist und die Trennkammer in zwei Kammerteile (7, 8), unterteilt,
- Elektroden (4), die auf beiden Seiten der Trennkammer parallel zum Trennelement (2) angeordnet sind, **dadurch gekennzeichnet, dass** die Vorrichtung ferner umfasst
- Mittel zum periodischen An- und Abschalten der Gleichspannung an den Elektroden (4), und
- Mittel zur Steuerung der Temperatur der Trennkammer, so dass die Temperaturgradienten an jeder Stelle der Trennkammer sowie die Temperaturunterschiede an den verschiedenen Stellen im Trennraum minimiert werden.

2. Elektrophoresevorrichtung nach Anspruch 1, **dadurch gekennzeichnet, daß** das Trennelement (2) eine Hohlfaser ist.

3. Elektrophoresevorrichtung nach Anspruch 1, **dadurch gekennzeichnet, daß** das Trennelement (2) aus einer einen Hohlraum bildenden Kunststofflachmembran besteht, die auf eine Innenfläche der Trennkammer geklebt ist.

4. Elektrophoresevorrichtung nach Anspruch 1, **dadurch gekennzeichnet, daß** das Trennelement (2) aus einer rinnenförmigen Vertiefung in einer Innenfläche der Trennkammer und einer gegenüberliegenden Absperrung der Trennkammer besteht, wobei Bohrungen zwischen der Trennkammer und der rinnenförmigen Vertiefung für die Zu- und Ableitung vorgesehen sind, die mit einer Flachmembran abgedeckt sind.

5. Elektrophoresevorrichtung nach einem der vorhergehenden Ansprüche, **dadurch gekennzeichnet, daß** der Probeneinlaß in den Innenhohlraum des Trennelementes (2) führt.

6. Elektrophoresevorrichtung nach einem der Ansprüche 1 bis 4, **dadurch gekennzeichnet, daß** der Probeneinlaß in einen Trennkammerteil führt.

7. Elektrophoresevorrichtung nach einem der vorhergehenden Ansprüche, **dadurch gekennzeichnet, daß** mehrere Trennelemente (2) parallel zueinander zur Durchführung einer simultanen Mehrfachelektrophorese in der Trennkammer vorgesehen sind.

8. Elektrophoreseverfahren unter Verwendung einer Elektrophoresevorrichtung nach einem der vorhergehenden Ansprüche, **dadurch gekennzeichnet, dass** an die Elektroden (4) eine Gleichspannung gelegt wird, die periodisch an- und abgeschaltet wird und die Temperatur gesteuert wird, so dass die Temperaturgradienten an jeder Stelle der Trennkammer sowie die Temperaturunterschiede an den verschiedenen Stellen im Trennraum minimiert werden.

9. Elektrophoreseverfahren unter Verwendung einer Elektrophoresevorrichtung nach einem der Ansprüche 1 bis 7, **dadurch gekennzeichnet, daß** an die Elektroden (4) eine Gleichspannung gelegt wird, deren Polarität periodisch umgekehrt wird, wobei die Zeitspanne mit einer Polarität der Gleichspannung, die der Polarität der Gleichspannung bei der aktiven Elektrophorese entgegengestzt ist, kürzer als die Zeitspanne der Polarität der Gleichspannung bei der aktiven Elektrophorese ist.

10. Elektrophoreseverfahren nach Anspruch 9, **dadurch gekennzeichnet, daß** der Innendruck in der Hohlfaser (2) verglichen zum umgebenden Außenraum periodisch geändert wird.

11. Verwendung der Elektrophoresevorrichtung nach einem der Ansprüche 1 bis 7 zur Immunextraktion.

## Claims

1. An electrophoretic device comprising:
- a separating chamber provided with at least one sample inlet on the inlet side and with outlets (9) for the electrophoretically treated sample species on the outlet side;
- at least one separating element (2) selectively permeable to particular sample species and having a longitudinally extending continuous interior cavity, arranged in the separating chamber from the inlet side to the outlet side and dividing the separating chamber into two chamber portions (7, 8);
- electrodes (4) arranged on both sides of said separating chamber in parallel with said separating element (2);
**characterized in that** said device further comprises:
- means for periodically turning on and off the direct voltage applied to the electrodes (4); and
- means for controlling the temperature of the separating chamber in such a way that the temperature gradients on every place of the separating chamber as well as the temperature differences on the different places in the separating space are minimized.

2. The electrophoretic device according to claim 1, **characterized in that** said separating element (2) is a hollow fiber.

3. The electrophoretic device according to claim 1, **characterized in that** said separating element (2) consists of a plastic sheet membrane forming a cavity and being adhesively bonded to an interior surface of the separating chamber.

4. The electrophoretic device according to claim 1, **characterized in that** said separating element (2) consists of a groove-like recess in an interior surface of the separating chamber and an opposing barrier of the separating chamber, wherein bores between the separating chamber and the groove-like recess for supply and drain are provided and covered by a sheet membrane.

5. The electrophoretic device according to any of the preceding claims, **characterized in that** said sample inlet leads into the interior cavity of said separating element (2).

6. The electrophoretic device according to any of claims 1 to 4, **characterized in that** said sample inlet leads into a portion of the separating chamber.

7. The electrophoretic device according to any of the preceding claims, **characterized in that** a multitude of separating elements (2) are provided in a parallel arrangement for performing a simultaneous multiple electrophoresis in the separating chamber.

8. An electrophoretic process using an electrophoretic device according to any of the preceding claims, **characterized in that** a direct voltage is applied to said electrodes (4) and periodically turned on and off, and the temperature is controlled in such a way that the temperature gradients on every place of the separating chamber as well as the temperature differences on the different places in the separating space are minimized.

9. An electrophoretic process using an electrophoretic device according to any of claims 1 to 7, **characterized in that** a direct voltage is applied to said electrodes (4) and its polarity is periodically reversed, wherein the period in which the polarity of said direct voltage is opposed to the polarity of the direct voltage during the active electrophoresis is shorter than the period of the polarity of said direct voltage during the active electrophoresis.

10. The electrophoretic process according to claim 9, **characterized in that** the interior pressure in said hollow fiber (2) relative to the surrounding exterior space is changed periodically.

11. Use of the electrophoretic device according to any of claims 1 to 7 for immunoextraction.

## Revendications

1. Dispositif d'électrophorèse comprenant :
- une chambre de séparation qui est dotée sur le côté entrée d'au moins une entrée d'échantillon et sur le côté sortie de sorties (9) pour les types d'échantillons traités par électrophorèse,
- au moins un élément de séparation (2) perméable de façon sélective pour certain types d'échantillons avec un espace creux intérieur continu et agencé dans le sens longitudinal, qui est disposé dans la chambre de séparation depuis le côté entrée vers le côté sortie et la chambre de séparation est subdivisée en deux parties de chambre (7, 8)
- des électrodes (4), qui sont disposées sur les deux côtés de la chambre de séparation parallèlement à l'élément de séparation (2), **caractérisé en ce que** le dispositif comprend également
- des moyens pour la connexion et la déconnexion périodique de la tension continue sur les électrodes (4) et,
- des moyens pour la commande de la température de la chambre de séparation, de sorte que les gradients de température et les différences de temperature sont minimisés respectivement à chaque endroit de la chambre de séparation et aux différents endroits dans la chambre de séparation.

2. Dispositif d'électrophorèse selon la revendication 1, **caractérisé en ce que** l'élément de séparation (2) est une fibre creuse.

3. Dispositif d'électrophorèse selon la revendication 1, **caractérisé en ce que** l'élément de séparation (2) est constitué d'une membrane plate de plastique formant un espace creux, qui est collée sur une surface intérieure de la chambre de séparation.

4. Dispositif d'électrophorèse selon la revendication 1, **caractérisé en ce que** l'élément de séparation (2) est constitué d'une cavité en forme de goulotte sur une surface intérieure de la chambre de séparation et d'un dispositif d'arrêt opposé de la chambre de séparation, des perçages entre la chambre de séparation et la cavité en forme de goulotte étant prévus pour la conduite d'arrivée et la conduite de sortie, qui sont recouvertes par une membrane plate.

5. Dispositif d'électrophorèse selon l'une quelconque des revendications précèdentes, **caractérisé en ce que** l'entrée d'échantillon aboutit dans l'espace creux inférieur de l'élément de séparation (2).

6. Dispositif d'électrophorèse selon l'une quelconque des revendications 1 à 4, **caractérisé en ce que** l'entrée d'échantillon aboutit dans une partie de chambre de séparation.

7. Dispositif d'électrophorèse selon l'une quelconque des revendications précèdentes, **caractérisé en ce que** plusieurs éléments de séparation (2) sont prévus dans la chambre de séparation parallèlement entre eux pour la mise en oeuvre d'une électrophorèse multiple et simultanée.

8. Procédé d'électrophorèse avec utilisation d'un dispositif d'électrophorèse selon l'une quelconque des revendications précédentes, **caractérisé en ce que** sur les électrodes (4) est appliquée une tension continue qui est connectée et déconnectée de façon périodique et la température est commandée de telle sorte que les gradients de température et les différences de température sont minimisés respectivement en chaque endroit de la chambre de séparation et aux différents endroits dans la chambre de séparation.

9. Procédé d'électrophorèse avec utilisation d'un dispositif d'électrophorèse selon l'une quelconque des revendications 1 à 7, **caractérisé en ce que** sur les électrodes (4) est appliquée une tension continue dont la polarité est inversée de façon périodique, le laps de temps avec une polarité de la tension continue, qui est opposée à la polarité de la tension continue lors de l'électrophorèse active, étant plus court que le laps de temps de la polarité de la tension continue lors de l'électrophorèse active.

10. Procédé d'électrophorèse selon la revendication 9, **caractérisé en ce que** la pression intérieure dans la fibre creuse (2) est modifiée périodiquement par rapport à l'espace extérieur environnant.

11. Utilisation du dispositif d'électrophorèse selon l'une quelconques des revendications 1 à 7 pour l'immuno-extraction.
